# EUROPÄISCHE PATENTSCHRIFT

(11) **EP 4 320 021 B1**
(45) Veröffentlichungstag und Bekanntmachung des Hinweises auf die Patenterteilung: **26.11.2025**
(21) Anmeldenummer: 22714357.5
(22) Anmeldetag: 18.03.2022
(51) Int. Cl.: B60W 50/00, B60W 50/023, B60W 30/12, B60W 50/04, G01S 13/86, B60W 50/02

(54) **VERFAHREN ZUM BETRIEB EINES ASSISTENZSYSTEMS SOWIE ASSISTENZSYSTEM**
METHOD FOR OPERATING AN ASSISTANCE SYSTEM, AND ASSISTANCE SYSTEM
PROCÉDÉ DE FONCTIONNEMENT D'UN SYSTÈME D'ASSISTANCE ET SYSTÈME D'ASSISTANCE

(30) Priorität: 09.04.2021 DE 102021203541
(43) Veröffentlichungstag der Anmeldung: 14.02.2024
(73) Patentinhaber: AUMOVIO Autonomous Mobility Germany GmbH, 85057 Ingolstadt (DE)
(72) Erfinder: EDLING, Frank, 90411 Nürnberg (DE); REISINGER, Sebastien, 90411 Nürnberg (DE); MATSCHAT, Henrik, 90411 Nürnberg (DE)
(74) Vertreter: Aumovio Corporation
(86) Internationale Anmeldenummer: PCT/DE2022/200046
(87) Internationale Veröffentlichungsnummer: WO 2022/214148

(56) Entgegenhaltungen:
- DE-A1- 102014 220 925
- DE-A1- 102018 130 815
- DE-A1- 102019 210 339

## Beschreibung

Die vorliegende Erfindung betrifft ein Verfahren zum Betrieb eines Assistenzsystems gemäß Anspruch 1 sowie ein Assistenzsystem. Ferner betrifft die vorliegende Erfindung ein Fahrzeug, welches ein erfindungsgemäßes Assistenzsystem aufweist, sowie ein Computerprogramm zur Durchführung des Verfahrens und ein transportables computerlesbares Speichermedium, auf dem das Computerprogramm zur Durchführung des Verfahrens gespeichert ist.

### Technologischer Hintergrund

Gattungsgemäße Fahrzeuge, wie z. B. Personenkraftfahrzeuge (PKW), Lastkraftwägen (LKW) oder Motorräder, werden zunehmend mit Assistenzsystemen bzw. Fahrerassistenzsystemen ausgerüstet, welche mit Hilfe von Sensorsystemen die Umgebung erfassen, Verkehrssituationen erkennen und den Fahrer unterstützen können, z. B. durch einen Brems- oder Lenkeingriff oder durch die Ausgabe einer optischen, haptischen oder akustischen Warnung. Als Sensorsysteme zur Umgebungserfassung werden regelmäßig Radarsensoren, Lidarsensoren, Kamerasensoren, Ultraschallsensoren oder dergleichen eingesetzt. Aus den durch die Sensoren ermittelten Sensordaten können anschließend Rückschlüsse auf die Umgebung gezogen werden, womit z. B. auch ein sogenanntes Umfeldmodell erzeugt werden kann. Darauf basierend können anschließend Anweisungen zur Fahrerwarnung/-Information oder zum geregelten Lenken, Bremsen und Beschleunigen ausgegeben werden. Durch die Sensor- und Umfelddaten verarbeitenden Assistenzfunktionen können dadurch z. B. Unfälle mit anderen Verkehrsteilnehmern vermieden oder komplizierte Fahrmanöver erleichtert werden, indem die Fahraufgabe bzw. die Fahrzeugführung unterstützt oder sogar komplett übernommen wird (teil- oder vollautomatisiert). Beispielsweise kann das Fahrzeug z. B. mittels einem Notbremsassistenten (EBA, Emergency Brake Assist) eine autonome Notbremsung (AEB, Automatic Emergency Brake), einem Zeitlückenregeltempomaten bzw. Adaptive Cruise Control-Assistenten (ACC) eine Geschwindigkeits- und Folgefahrtregelung durchführen oder einem Lenkassistenten die Fahrspur des Fahrzeuges halten (LKA, Lane Keep Assist). Dabei gibt es Assistenzfunktionen wie EBA, die i.d.R. automatisch aktiviert werden bzw. automatische Eingriffe aktivieren oder Assistenzfunktionen, die der Fahrer i.d.R. aktiviert, wie z. B. ACC.

Gattungsgemäße Assistenzsysteme verfügen in der Regel über eine statische Architektur nach dem Prinzip "Messen - Planen - Aktion" (Sense - Plan - Act), bei dem die verschiedenen Sensoren Daten in ein zentrales Steuergerät (ECU - Electric Control Unit) einspeisen, welches dann ein zentrales "Umfeldmodell" erstellt. Dieses "Umfeldmodell" wird dann mit einer "Fahrfunktion" (Manöverplanung, Trajektorienplanung) verbunden und speist dann die benötigten Daten in ein Bewegungskontrollmodul (Motion Control) am zentralen Steuergerät ein. Der Ausgang des zentralen Steuergeräts ist dann an verschiedene Aktuatoren (Bremssystem, Lenkanlage, Antriebsstrang) angeschlossen, um die Fahrfunktion durchzuführen. Die Sensorarchitektur ist dabei statisch. Sofern allerdings Redundanz erforderlich ist, wird ein Satz von Sensoren (ein sogenanntes Sensorset) verwendet für den sogenannten "Hauptpfad" der Kontrollfunktion (z. B. eine erste Kamera, die zur Spurhaltung herangezogen wird) verwendet. Demgegenüber wird für einen Sicherheitspfad (Redundanz des Hauptpfades) ein zweiter Satz von Sensoren verwendet (z. B. eine zweite Kamera zur Erkennung von Fehlern in der Spurschätzung der ersten Kamera), um Fehler zu erkennen und das System in einen sicheren Zustand zu bringen.

Aus der ISO26262 "Road vehicles - Functional safety" sind Befehle bekannt, welche eine "Störungsfreiheit" für den Hauptpfad einer Fahrfunktion und eine Sicherheitsfunktion aufzeigen. Dabei darf z. B. eine Kamera, die zur Erzeugung bzw. Detektion von Fahrspuren für eine Fahrfunktion eingesetzt wird, z. B. im Rahmen eines Spurhalteassistenten, nicht zur Überprüfung der Richtigkeit der erstellten Fahrbahn verwendet werden. Da die anfängliche Spurengenerierung fehlerhaft sein könnte, wäre die Validierung mit derselben Spurinformation nicht zweckmäßig. Der Standardansatz besteht somit darin, vollständig redundante Einheiten aufzubauen: z. B. neben dem Hauptpfad einen Sicherheitspfad mit einer separaten Kamera. Dieses Redundanzkonzept durch getrennte Pfade ist jedoch "kostenintensiv", da i.d.R. ein zweites Sensorset notwendig ist, wodurch zudem separate Kosten für Anschaffung und Installation entstehen.

### Druckschriftlicher Stand der Technik

Aus der DE 10 2017 210 156 A1 ist eine Vorrichtung zum Ansteuern eines Fahrzeugmoduls bekannt, aufweisend einen Sicherheitsprozessor mit wenigstens einer Informationsschnittstelle an einem Eingang des Sicherheitsprozessors und einer Steuerungsschnittstelle an einem Ausgang des Sicherheitsprozessors, wobei der Sicherheitsprozessor einen ersten Kern, einen zweiten Kern und einen dritten Kern aufweist. Der erste Kern ist ausgebildet, eine erste Plausibilitätskontrolle wenigstens einer über die Informationsschnittstelle an den Sicherheitsprozessor geleiteten ersten Information mit wenigstens einer über die Informationsschnittstelle an den Sicherheitsprozessor geleiteten zweiten Information auszuführen; der zweite Kern ist ausgebildet, eine zweite Plausibilitätskontrolle der ersten Information mit der zweiten Information auszuführen und der dritte Kern ist ausgebildet, einen Vergleich eines an den dritten Kern weitergeleiteten Ergebnisses der auf dem ersten Kern ausgeführten ersten Plausibilitätskontrolle mit einem an den dritten Kern weitergeleiteten Ergebnis der auf dem zweiten Kern ausgeführten zweiten Plausibilitätskontrolle auszuführen und die Informationen, für die in der ersten Plausibilitätskontrolle und in der zweiten Plausibilitätskontrolle eine Plausibilität festgestellt wurde, an die Steuerungsschnittstelle weiterzuleiten, wobei das Fahrzeugmodul mit den als plausibel festgestellten Informationen über die Steuerungsschnittstelle ansteuerbar ist.

Ferner offenbart die DE 102017 007 958 A1 ein Fahrerassistenzsystem für ein Fahrzeug, mit einem ersten Überwachungssystem zur Überwachung einer seitlichen Umgebung des Fahrzeugs mit einem ersten Überwachungsbereich, einem zweiten, von dem ersten Überwachungssystem verschiedenen Überwachungssystem zur Überwachung der seitlichen Umgebung des Fahrzeugs mit einem zweiten, von dem ersten Überwachungsbereich verschiedenen Überwachungsbereich, und mit einer Steuereinrichtung, die eingerichtet ist zur Auswertung von ersten Daten des ersten Überwachungssystems und von zweiten Daten des zweiten Überwachungssystems. Dabei ist vorgesehen, dass die Steuereinrichtung eingerichtet ist, um aus den ersten Daten des ersten Überwachungssystems und den zweiten Daten des zweiten Überwachungssystems eine gemeinsame Repräsentation einer geometrischen Überlappung des ersten Überwachungsbereichs und des zweiten Überwachungsbereichs zu bilden.

Aus DE 10 2019 210 339 A1 ist zudem ein Verfahren zum Betrieb eines Assistenzsystems für ein Fahrzeug gemäß dem Oberbegriff von Anspruch 1 bekannt.

### Aufgabe der vorliegenden Erfindung

Ausgehend vom Stand der Technik liegt die Aufgabe der vorliegenden Erfindung darin, ein Verfahren zur Verfügung zu stellen, durch das ein gattungsgemäßes Assistenzsystem in einfacher Weise kostengünstig derart verbessert werden kann, so dass die Nachteile aus dem Stand der Technik überwunden werden, wobei eine ausreichende Redundanz für sicherheitskritische Fahrfunktionen bzw. Anwendungsfälle gegeben ist.

### Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Das erfindungsgemäße Verfahren zum Betrieb eines Assistenzsystems für ein Fahrzeug, umfasst eine Steuereinrichtung zur Steuerung des Assistenzsystems, mehrere Sensoren zur Umfelderfassung, ein erstes Sensorset, welches mindestens einen Sensor der Sensoren zur Umfelderfassung umfasst, und ein zweites Sensorset, welches mindestens einen Sensor der Sensoren zur Umfelderfassung umfasst, wobei die Sensorsignale des ersten Sensorsets zur Erstellung eines Umfeldmodells herangezogen werden und Trajektorienplanung und Fahrfunktionen des Assistenzsystems anhand des Umfeldmodells durchgeführt werden, und ein Sensorsignalpfadschalter vorgesehen ist, der die Sensorsignale des zweiten Sensorsets entweder über einen Hauptpfad an die Signalverarbeitung des Umfeldmodells oder über einen Sicherheitspfad an die Signalverarbeitung einer Plausibilitätsüberprüfung der geplanten Trajektorie leitet.

Daraus resultieren die Vorteile, dass bei einem (teil-) automatisierten Fahrzeug genügend Redundanz in der Signalverarbeitungskette je nach aktivierter Funktion und Anwendungsfall sichergestellt ist, um ein sicheres Fahren und einen ausfallsicheren Betrieb zu gewährleisten, wobei keine wesentlichen zusätzlichen Kosten für Sensoren und deren Installation, Verdrahtung oder Wartung entstehen.

Ferner ist ein Modus-Manager vorgesehen, der dazu hergerichtet ist, Assistenzfunktionen und automatisch zu aktivierende Assistenzfunktionen zu erkennen und anhand der erkannten Assistenzfunktionen die Notwendigkeit feststellen kann, ob ein Sicherheitspfad benötigt wird oder nicht.

Vorzugsweise schaltet der Sensorsignalpfadschalter die Sensorsignale anhand der Feststellung des Modus-Managers.

Zudem beansprucht die vorliegende Erfindung ein Verfahren zum Betrieb eines Assistenzsystems für ein Fahrzeug, welches folgende Verfahrensschritte umfasst:
- Bestimmen einer durchzuführenden Assistenzfunktion,
- Bestimmen einer automatisch zu aktivierenden Assistenzfunktion,
- Feststellung der Notwendigkeit, für die aktivierten Funktionen einen redundanten Sensorpfad (=Sicherheitspfad) aufzubauen
- Abschaltung der Signale der Sensoren des redundanten Pfades für den Hauptpfad des Systems, falls der redundante Pfad notwendig ist
- Aktivierung des redundanten Pfades zur Prüfung der Ausgaben des Hauptpfads des Systems, falls der redundante Pfad notwendig ist
- Deaktivierung der Funktionen, die ohne die Sensoren (d. h. des zweiten Sensorsets) des redundanten Pfades nicht möglich sind.

Ferner kann die Notwendigkeit, für die aktivierten Funktionen einen redundanten Sensorpfad aufzubauen anhand der aktivierten Funktion (z. B. Hands-off, Traffic Jam Companion) und des aktuellen Fahrzeugzustandes (Stillstand, in Bewegung, Fahrzeuggeschwindigkeit) festgestellt werden.

Vorzugsweise wird die Notwendigkeit, für die aktivierten Funktionen einen redundanten Sensorpfad aufzubauen anhand des Fahrerzustandes (Hands-on oder Hands-off) festgestellt.

Ferner kann der redundante Pfad verwendet werden, um die ausgegebene Trajektorie des Hauptpfades, auf der gefahren werden soll, gegen ein alternatives Straßenmodell des redundanten Pfades zu plausibilisieren.

Zweckmäßigerweise kann der redundante Pfad verwendet werden, um bei unplausibler Trajektorie des Hauptpfades, die Fahrerübergabe und den risikominimalen Zustand (insbesondere das Bremsen in den Stillstand auf letzten gültigen Pfad) herbeizuführen.

Ferner kann das Straßenmodell des redundanten Pfades anhand von detektierten Spurmarkierungen einer redundanten Kamera (z. B. Surround View, die sonst nur zu Parken verwendet wird) erstellt werden.

Ferner umfasst die vorliegende Erfindung ein Assistenzsystem, umfassend eine Steuereinrichtung zur Steuerung des Assistenzsystems, mehrere Sensoren zur Umfelderfassung, wobei ein erstes Sensorset festgelegt wird, welches mindestens einen Sensor der Sensoren zur Umfelderfassung umfasst, und ein zweites Sensorset festgelegt wird, welches mindestens einen Sensor der Sensoren zur Umfelderfassung umfasst, wobei die Sensorsignale des ersten Sensorsets zur Erstellung eines Umfeldmodells herangezogen werden, und Trajektorienplanung und Fahrfunktionen des Assistenzsystems anhand des Umfeldmodells durchgeführt werden, und ein Sensorsignalpfadschalter vorgesehen ist, der die Sensorsignale des zweiten Sensorsets entweder über einen Hauptpfad an die Signalverarbeitung des Umfeldmodells oder über einen Sicherheitspfad an die Signalverarbeitung einer Plausibilitätsüberprüfung der geplanten Trajektorie schaltet, und ein Modus-Manager vorgesehen ist, der dazu hergerichtet ist, Assistenzfunktionen und automatisch zu aktivierende Assistenzfunktionen zu erkennen und anhand der erkannten Assistenzfunktionen die Notwendigkeit feststellen kann, ob ein Sicherheitspfad benötigt wird oder nicht.

Ferner umfasst die vorliegende Erfindung auch ein Computerprogramm mit Programmcode zur Durchführung des erfindungsgemäßen Verfahrens, wenn das Computerprogramm in einem Computer oder einem sonstigen aus dem Stand der Technik bekannten programmierbaren Rechner ausgeführt wird. Demzufolge kann das Verfahren auch als rein computerimplementiertes Verfahren ausgestaltet sein, wobei der Begriff "computerimplementiertes Verfahren" im Sinne der Erfindung eine Ablaufplanung oder Vorgehensweise beschreibt, welche anhand eines Rechners verwirklicht bzw. durchgeführt wird. Der Rechner, wie z. B. ein Computer, ein Computernetzwerk oder eine andere aus dem Stand der Technik bekannte programmierbare Vorrichtung (z. B. eine einen Prozessor, Mikrocontroller oder dergleichen umfassenden Rechnervorrichtung, wie z. B. eine Steuereinrichtung), kann dabei mittels programmierbarer Rechenvorschriften Daten verarbeiten.

Zudem umfasst die vorliegende Erfindung ein computerlesbares Speichermedium, das Anweisungen umfasst, welche den Computer, auf dem sie ausgeführt werden, veranlassen, ein Verfahren nach mindestens einem der vorhergehenden Ansprüche durchzuführen.

Ferner umfasst die vorliegende Erfindung auch ein Fahrzeug, das ein erfindungsgemäßes Assistenzsystem, ein erfindungsgemäßes Computerprogramm oder ein erfindungsgemäßes computerlesbares Speichermedium umfasst.

Im Sinne der vorliegenden Erfindung sind unter dem Term "USS" Ultraschallsensoren subsummiert, die z. B. für automatisiertes Parken, Vermeidung von Kollisionen bei geringer Geschwindigkeit, Erkennung der Clearance für ACC "auto go" eingesetzt werden. Ferner sind unter dem Term "SRR" Kurzstreckenradare subsummiert, die z. B. zur Vermeidung von Seitenaufprallen im assistierten Modus oder zur verbesserten ACC-Einschererkennung eingesetzt werden. Ferner können Module oder Einheiten im Ablaufplan im Sinne der Erfindung als gegenständliche Bausteine (Steuereinheit, IC-Baustein oder dergleichen) oder als Softwarebausteine ausgestaltet sein.

### Beschreibung der Erfindung anhand von Ausführungsbeispielen

Im Folgenden wird die Erfindung anhand von zweckmäßigen Ausführungsbeispielen näher erläutert. Es zeigen:
Fig. 1 eine stark vereinfachte schematische Darstellung eines (Ego-) Fahrzeuges mit erfindungsgemäßem Assistenzsystem;
Fig. 2 eine stark vereinfachte schematische Darstellung einer Ablaufplanung eines gattungsgemäßen Verfahrens gemäß dem Stand der Technik;
Fig. 3 eine stark vereinfachte schematische Darstellung einer Ausgestaltung einer Ablaufplanung des erfindungsgemäßen Verfahrens;
Fig. 4 eine stark vereinfachte schematische Darstellung einer Ausgestaltung eines Ablaufplans gemäß dem erfindungsgemäßen Verfahren in einer Situation "Hands-off" und 60 km/h;
Fig. 5 eine stark vereinfachte schematische Darstellung einer weiteren Ausgestaltung eines Ablaufplans gemäß dem erfindungsgemäßen Verfahren in einer Situation "Hands-off" und 60 km/h;
Fig. 6 eine stark vereinfachte schematische Darstellung einer weiteren Ausgestaltung eines Ablaufplans gemäß dem erfindungsgemäßen Verfahren in einer Situation "Hands-off" und 130 km/h, sowie
Fig. 7 eine stark vereinfachte Übersichtsdarstellung eines Plausibilitätstests.

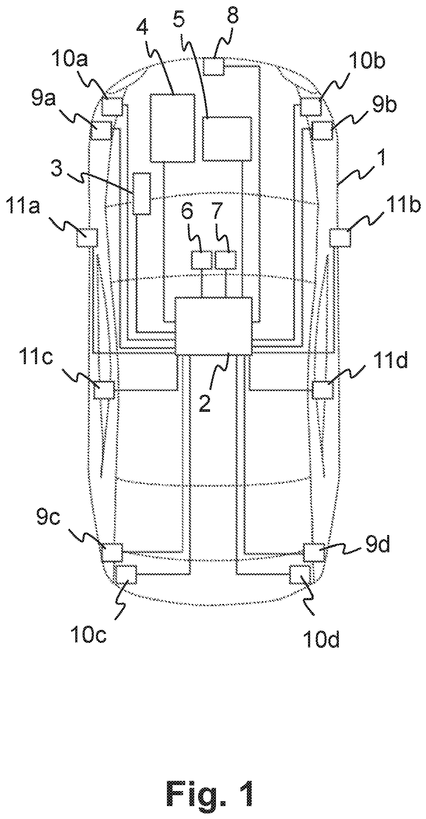

Bezugsziffer 1 in Fig. 1 bezeichnet ein Ego-Fahrzeug bzw. Fahrzeug mit verschiedenen Aktoren (Lenkung 3, Motor 4, Bremse 5), welches eine Steuereinrichtung 2 (ECU, Electronic Control Unit oder ADCU, Assisted and Automated Driving Control Unit) aufweist, durch die eine (teil-) automatisierte Steuerung des Fahrzeuges 1 erfolgen kann, indem die Steuereinrichtung 2 auf die Aktoren zugreifen kann. Ferner weist das Fahrzeug 1 Sensoren zur Umfelderfassung auf (Frontkamera bzw. Kamera 6, Lidarsensor 7, Radarsensoren 8 (Long-Range-Radarsensor; LRR) bzw. 9a-9d (Short-Range-Radarsensor; SRR), Ultraschallsensoren (USS) 10a-10d sowie Surround-View-Kameras 11a-11d), deren Sensordaten zur Umfeld- und Objekterkennung genutzt werden, sodass verschiedene Assistenzfunktionen, wie z. B. Parkassistent, Notbremsassistent (EBA, Electronic Brake Assist), Abstandsfolgeregelung (ACC, Adaptive Cruise Control), Spurhalteregelung bzw. ein Spurhalteassistent (LKA, Lane Keep Assist) oder dergleichen, realisiert werden können. Die Ausführung der Assistenzfunktionen erfolgt dabei über die Steuereinrichtung 2 bzw dem dort hinterlegten Algorithmus. Ferner können auch weitere untergeordnete Steuereinheiten (ECUs) vorgesehen sind, z. B. zum Ansteuern des Surround-View Systems. Ferner sind im Rahmen der Erfindung auch unterschiedliche Anordnungen von Sensoren erfasst, z. B. können auch mehr als vier Radarsensoren, Surround-View-Kameras oder Ultraschallsensoren vorgesehen sein, die an beliebigen Stellen des Fahrzeuges 1 angeordnet sein können.

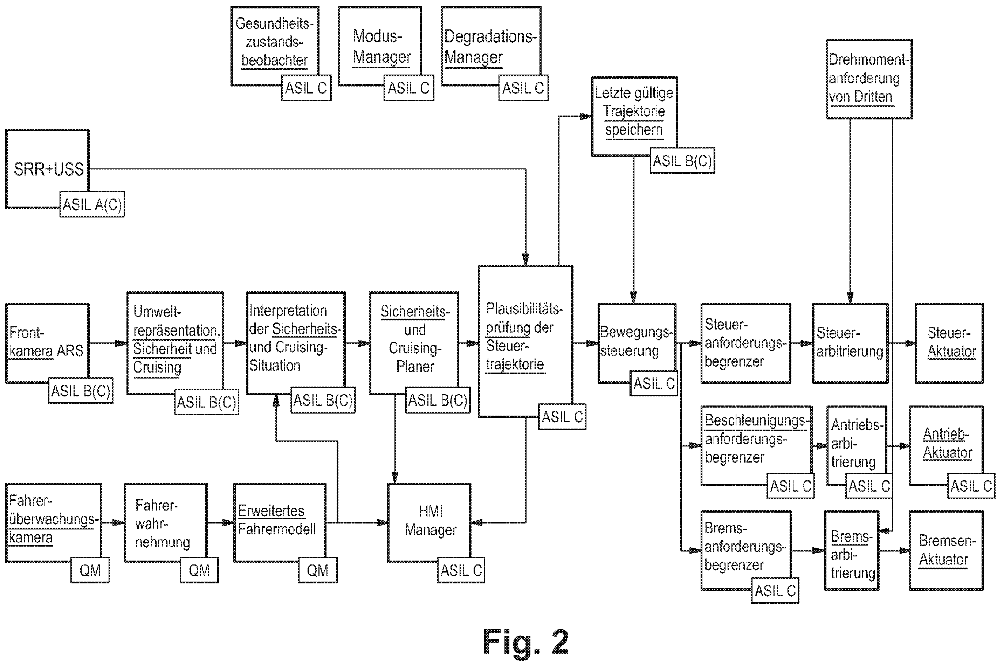

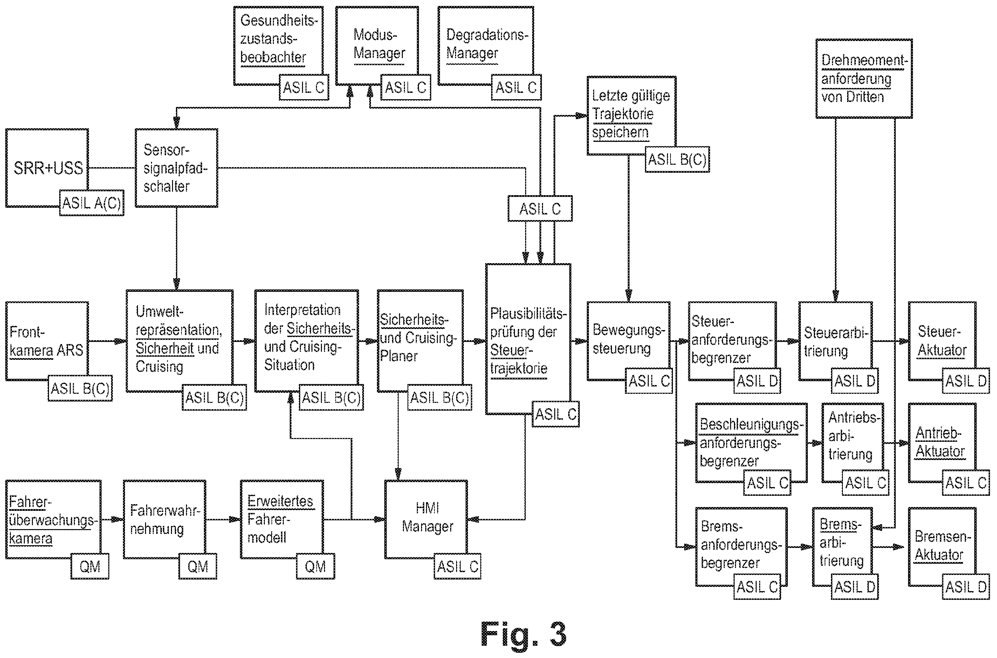

In Fig. 2 ist eine Ablaufplanung eines gattungsgemäßen Verfahrens gemäß dem Stand der Technik dargestellt. Demgegenüber zeigt Fig. 3 eine beispielhafte Ausgestaltung einer Ablaufplanung eines erfindungsgemäßen Verfahrens.

Erfindungsgemäß ist der Modus-Manager und Sensorsignalpfadschalter von besonderer Bedeutung. Der Modus-Manager erkennt die durch den Fahrer aktivierten Funktionen, wie zum Beispiel ACC (insbesondere Abstandsregeltempomat im Stop & Go), TJC (Traffic Jam Companion: Handfreies Fahren im Stau, Spurführung und ACC-Abstandsregeltempomat im Stop & Go) oder Spurhalteassistent (Lane Keeping). Ferner erkennt der Modus-Manager automatisch aktivierte Funktionen, wie z. B. Notbremsassistent, Spurverlassenschutz-Assistent und er erkennt den Anwendungsfall; z. B. Fokus auf TJC im Stillstand bereit zum Anfahren, TJC beim Anfahren mit Geschwindigkeit < 10 km/h oder TJC während dem Betrieb mit Geschwindigkeit < 10 km/h. Darüber hinaus gibt der Modus-Manager Befehle aus, die den zweiten Sensorsatz (zum Beispiel "SRR+Ultraschall") auf das Modul "Sensorsignalpfadschalter" umschalten.

Der Sensorsignalpfadschalter (Sensor signal path switch) kann einen zweiten Sensor je nach aktiver Funktion bzw. erkanntem Anwendungsfall zum Modul "Environment Representation Safety and Cruising" oder zum Modul "Steering Trajectory Plausiblity Checker" schalten.

Ferner kann über eine Plausibilitätsprüfung die Plausibilität der Trajektorie geprüft werden, indem ein redundantes Straßenmodell aus dem zweiten Sensorset erstellt wird (z. B. anhand von Sicherungsobjekten von den Ultraschallsensoren 10a-10d oder dem Kurzstreckenradar-en 9a-9d um z. B. "Schwarmspuren" (anderer Fahrzeuge) zu erkennen oder dem anhand von Radardaten erkannten Pfad. Darüber hinaus wird geprüft, ob die Fahrbahn des Moduls "Cruising and Safety Planner" innerhalb der Fahrspurgrenzen liegt, was anhand des zweiten Sensorsets berechnet wird. Anhand dieser Daten kann dann entschieden werden, on die Trajektorie plausibel bzw. gültig ist (dann weiterleiten zum Motion Controller) oder nicht-plausibel bzw. ungültig ist (danach erfolgt: Aktivieren des Minimum Risk Manövers über Modus-Manager und Informieren des Fahrers bzw. Fahrerwarnung ausgeben).

Der Zweck hierbei ist, einen redundanten "Plausibilitätsprüfpfad" für "Hands-off-Fahrten" zu schaffen, um ein sicheres Fahren für mindestens 3 Sekunden (ggf. auch länger: 4 Sekunden, 5 Sekunden oder dergleichen) zu gewährleisten. Dies entspricht in etwa der Übernahmedauer von der Warnung, bis der Fahrer übernehmen kann (Hands-off-Modus zu Hands-on-Modus). Der Grundgedanke dabei ist, Sensoren nur dann auf einen redundanten Pfad umstellen, wenn die Funktion "Hands-off-Fahrt in Fahrspur" aktiv ist und wenn ein bestimmter Anwendungsfall (z. B. Fahren > 10 km/h und < 60 km/h) vorliegt, der die Redundanz auch erforderlich macht, um das Risiko einer physischen Beschädigung zu vermeiden. Beispielsweise ist eine derartige Redundanz bei einem herkömmlichen ACC-Betrieb im Hand-on-Modus nicht erforderlich, sodass das zweite Sensorset hier genutzt werden kann, um das Umfeldmodell, welches anhand von Daten des ersten Sensorsets erzeugt wird, zusätzlich mit Daten zu speisen.

Eine erfindungsgemäße Ausführung des Verfahrens kann wie folgt ausgestaltet sein:
I. Modus-Manager (Mode Manager):
   - Erkennen der aktivierten Funktion durch den Fahrer
   - Automatische Erkennung aktivierter Funktionen
   - Prüfung der Deaktivierungskriterien für aktivierte Funktionen (z. B. Bremspedalkanäle ACC / Cruising Companion)
   - Abwägen der Funktionen (aktive Funktionen)
   - Fahrerübersteuerung erkennen (Lenkrad, Bremse, Gaspedal)
   - Testen, ob das Aktivierungskriterium für den Plausibilitätspfad gegeben ist.

Wenn die aktive Funktion der "Hands-off Traffic Jam Companion" ist und die Fahrzeuggeschwindigkeit größer als eine unterer Schwellwert ist (z. B. 10 km/h) und die die Fahrzeuggeschwindigkeit kleiner ist als eine oberer Schwellwert (z. B. 60 km/h) und "Hands-off Betrieb" erkannt ist, dann wird an den Sensorsignalpfadschalter angefordert, die Signale des zweiten Sensorsets auf den Plausibilitätsprüfpfad umzuschalten.
- Benötigte Funktionsdeaktivierung/Anpassung durch das zweite Sensorset
- Signalumschaltung auf "Überprüfung der Plausibilität der Lenkbahn"; Zum Beispiel: Deaktivieren der Aktivierung, Vermeidung von Seitenaufprallen (kein SRR), Deaktivierung der "ACC-auto-go-Detection" (keine Ultraschallsensoren), Adaptieren der Einscherererkennung für ACC (keine genaue Erkennung der Einscherer durch SRR, konservativere Einstellung) oder dergleichen.

### II. Sensorsignalpfadschalter

Die Eingabe aus Modus-Manager wird überprüft, indem die Daten auf der Schnittstelle als "gültig" anzugeben sind, wenn Daten vom zweiten Sensorset (z. B. USS+SRR) an das gewünschte Ziel gesendet werden ("Überprüfung der Plausibilität der Trajektorie" oder "Umweltrepräsentation, Sicherheit und Cruising"). Danach: Markieren der Schnittstelle zu einem anderen Block (nicht Ziel) als "ungültig".

### III. Prüfung der Plausibilität der Trajektorie

Anfrage, ob eine Anforderung des Modus-Managers vorliegt. Wenn eine Anforderung aktiv zu werden und gültige Daten aus dem Sensorset vorliegen, dann "prüfen, ob die Trajektorie innerhalb der Spurweite, der vom zweiten Sensorset ermittelten Spurweite liegt. Falls nicht erfolgt keine Prüfung der Trajektorien und es wird keine Anfrage an den Modus-Manager gesendet.

### IV. Environment Representation Safety and Cruising

Prüfen, ob Daten aus dem zweiten Sensorset gültig sind oder nicht und ggf. Verwenden der Daten bei der Sensorfusion (des ersten Sensorsets).

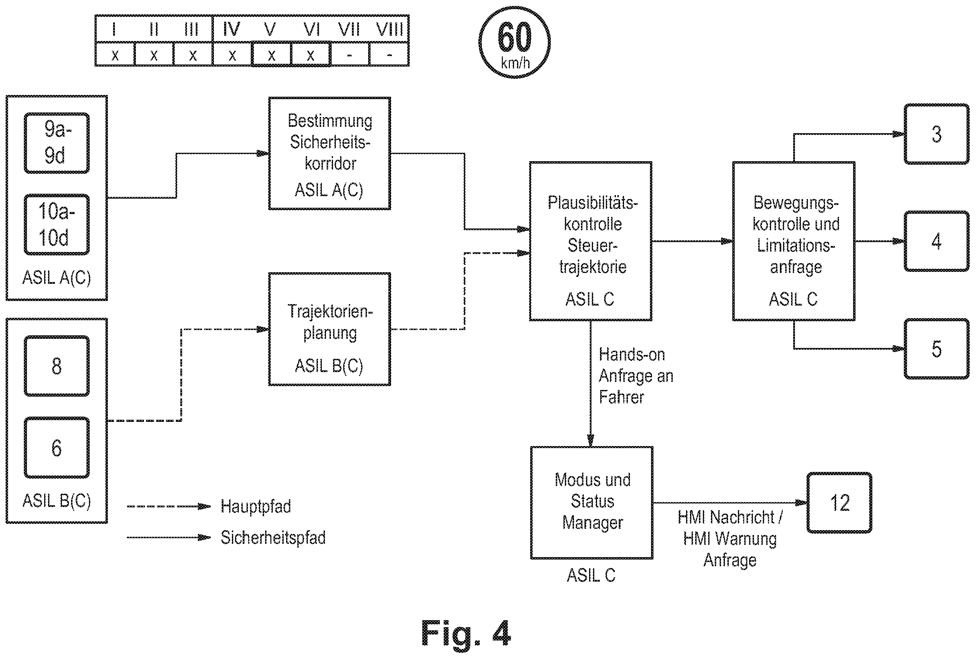

In Fig. 4 ist eine Ausgestaltung bzw. Architektur des erfindungsgemäßen Verfahrens gezeigt: Das Hands-off-Konzept basiert auf der Grundlage der Plausibilitätsprüfung der geplanten Ego-Trajektorie gegen die Fahrbahnerkennung der Radarsensoren 9a-9d mit optionaler Ultraschalldetektion via 10a-10d bei bis zu 60 km/h. Hierbei sind SRR 9a-9d sowie Ultraschalldetektoren 10a-10d dem zweiten Sensorset und Radarsensor 8 und Kamera 6 (sowie ggf. Lidar 7; nicht gezeigt in Fig. 4) dem ersten Sensorset zugeordnet. Bei Funktionsstörungen des Systems, wird die zuletzt gültige Lenkungsanfrage konstant gehalten oder die zuletzt gefahrene bzw. im System gespeicherte Trajektorie wird weiterverfolgt, das Fahrzeug wird abgebremst und der Fahrer wird aufgefordert zu übernehmen.

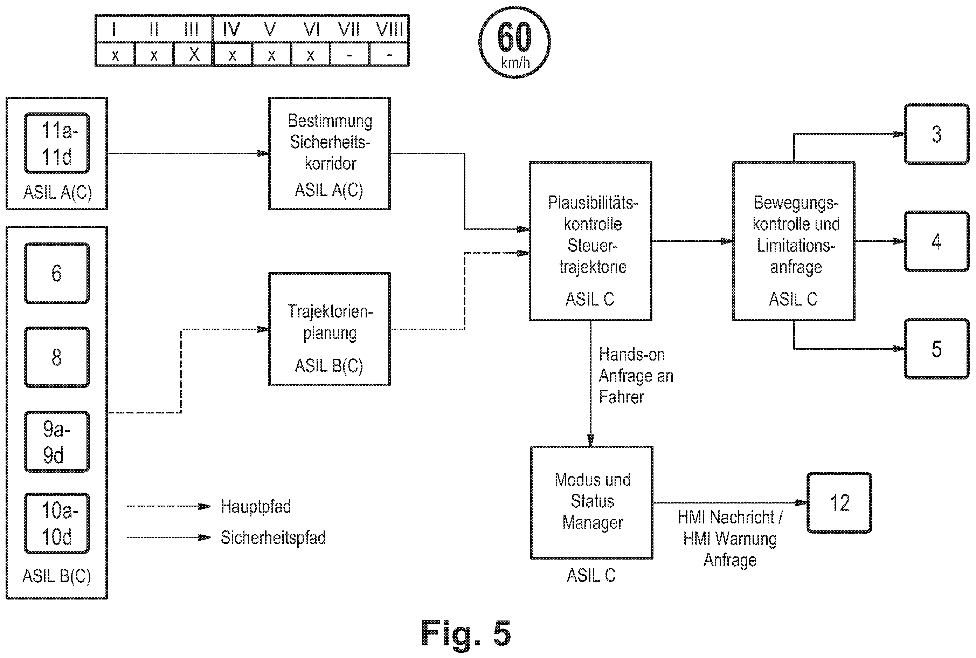

In Fig. 5 ist eine Ausgestaltung bzw. Architektur des erfindungsgemäßen Verfahrens gezeigt: Das Hands-off-Konzept basiert auf der Grundlage der Plausibilitätsprüfung der geplanten Ego-Trajektorie gegen die Fahrstreifenerkennung der Surroundview-Kameras bei bis zu 60 km/h. Hierbei sind die SV-Kameras 11a-11d dem zweiten Sensorset und Radarsensor 8, Radar-sensoren 9a-9d, Ultraschallsensoren 10a-10d und Kamera 6 (sowie ggf. Lidar 7; nicht gezeigt in Fig. 4) dem ersten Sensorset zugeordnet. Bei Funktionsstörungen des Systems, wird die zuletzt gültige Lenkungsanfrage konstant gehalten oder die zuletzt gefahrene bzw. im System gespeicherte Trajektorie wird weiterverfolgt, das Fahrzeug wird abgebremst und der Fahrer wird aufgefordert zu übernehmen.

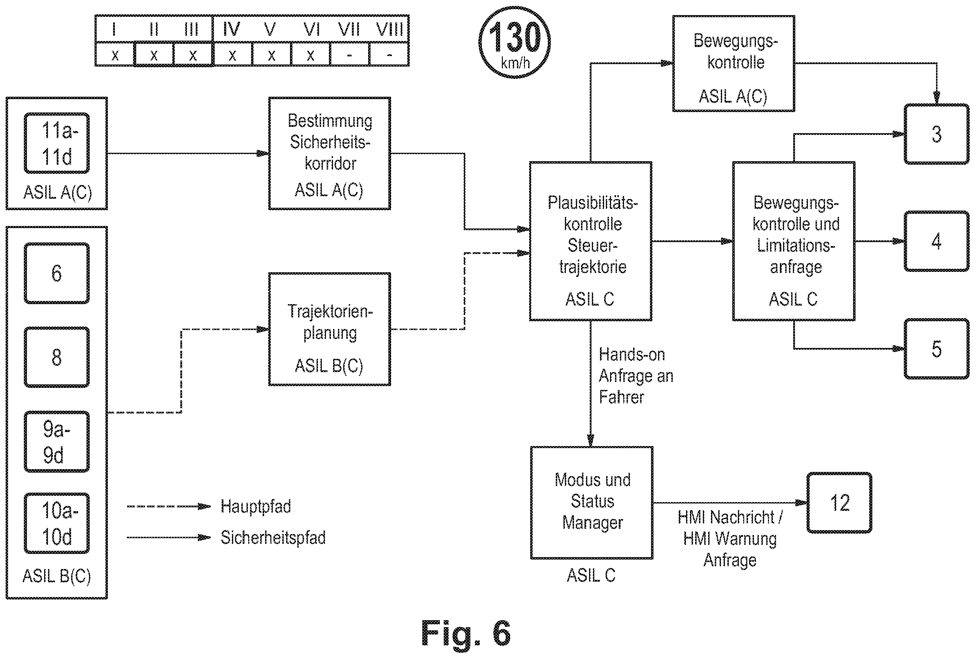

In Fig. 6 ist eine Ausgestaltung bzw. Architektur des erfindungsgemäßen Verfahrens gezeigt: Das Hands-off-Konzept basiert auf der Grundlage der Plausibilitätsprüfung der geplanten Ego-Trajektorie gegen die Fahrstreifenerkennung der Surroundview-Kameras bei bis zu 130 km/h. Hierbei sind die SV-Kameras 11a-11d dem zweiten Sensorset und Radarsensor 8, Radar-sensoren 9a-9d, Ultraschallsensoren 10a-10d und Kamera 6 (sowie ggf. Lidar 7; nicht gezeigt in Fig. 4) dem ersten Sensorset zugeordnet. Bei Funktionsstörungen des Systems, wird die zuletzt gültige Lenkungsanfrage konstant gehalten oder die zuletzt gefahrene bzw. im System gespeicherte Trajektorie wird weiterverfolgt, das Fahrzeug wird abgebremst und der Fahrer wird aufgefordert zu übernehmen. Durch eine derartige Ausgestaltung wird eine höhere Sicherheit für höhere Geschwindigkeiten gewährleitet.

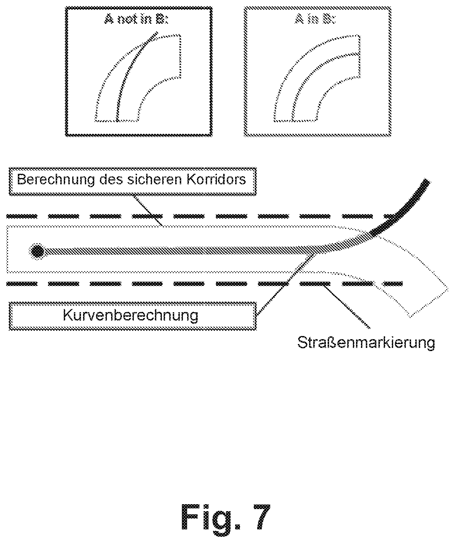

In Fig. 7 ist eine Ausgestaltung eines Plausibilitätstests gezeigt. Mit einer vorausschauenden Plausibilitätsprüfung der Ego-Spur kann frühzeitig zum manuellen Fahren übergegangen werden. Der Plausibilitätsbereich kann derart gewählt werden, dass der Fahrer eine vordefinierte Reaktionszeit erhält, bevor eine Fehlerkennung (z. B. falsche Spurerkennung) oder ein falsches Lenkmanöver aufgrund eines E/E-Versagens zum Verlassen der Fahrspur führt. Sind die verwendeten Eingabedaten der Plausibilitätsprüfung nicht miteinander vereinbar, kann ein Eskalationskonzept mit ausreichender Vorlaufzeit eingeleitet werden und, wenn der Fahrer nicht reagiert, kann das System in einen sicheren Zustand gebracht werden. Maßnahmen einschließlich einer zusätzlichen Systemreaktion z. B. einer Verzögerung zur Verlängerung der gewährten Reaktionszeit können zudem auch im Falle einer fehlgeschlagenen Plausibilitätsprüfung eingeleitet werden.

## Patentansprüche

1. Verfahren zum Betrieb eines Assistenzsystems für ein Fahrzeug (1), umfassend eine Steuereinrichtung (2) zur Steuerung des Assistenzsystems,
mehrere Sensoren zur Umfelderfassung, wobei
ein erstes Sensorset, welches mindestens einen Sensor der Sensoren zur Umfelderfassung umfasst, festgelegt wird und
ein zweites Sensorset, welches mindestens einen Sensor der Sensoren zur Umfelderfassung umfasst, festgelegt wird, wobei
die Sensorsignale des ersten Sensorsets zur Erstellung eines Umfeldmodells herangezogen werden,
Trajektorienplanung und Fahrfunktionen des Assistenzsystems anhand des Umfeldmodells durchgeführt werden, und
ein Sensorsignalpfadschalter vorgesehen ist, der die Sensorsignale des zweiten Sensorsets entweder über einen Hauptpfad an die Signalverarbeitung des Umfeldmodells oder über einen Sicherheitspfad an die Signalverarbeitung einer Plausibilitätsüberprüfung der geplanten Trajektorie leitet,
**dadurch gekennzeichnet, dass**
ein Modus-Manager vorgesehen ist, der dazu hergerichtet ist, Assistenzfunktionen und automatisch zu aktivierende Assistenzfunktionen zu erkennen und anhand der erkannten Assistenzfunktionen die Notwendigkeit feststellen kann, ob ein Sicherheitspfad benötigt wird oder nicht.

2. Verfahren nach Anspruch 1, **dadurch gekennzeichnet, dass** der Sensorsignalpfadschalter die Sensorsignale anhand der Feststellung des Modus-Managers schaltet.

3. Verfahren nach einem der vorhergehenden Ansprüche, umfassend folgende Verfahrensschritte:
- Bestimmen einer durchzuführenden Assistenzfunktion,
- Bestimmen einer automatisch zu aktivierenden Assistenzfunktion,
- Feststellung der Notwendigkeit, für die aktivierten Funktionen einen Sicherheitspfad aufzubauen,
- Abschaltung der Signale der Sensoren des Sicherheitspfades für den Hauptpfad des Systems, falls der Sicherheitspfad notwendig ist,
- Aktivierung des Sicherheitspfades zur Prüfung der Ausgaben des Hauptpfads des Systems, falls der Sicherheitspfad notwendig ist, und
- Deaktivierung der Assistenzfunktionen, die ohne die Sensoren des Sicherheitspfades nicht möglich sind.

4. Verfahren nach mindestens einem der vorhergehenden Ansprüche, **dadurch gekennzeichnet, dass** die Notwendigkeit, für die aktivierten Funktionen einen Sicherheitspfad aufzubauen anhand der aktivierten Funktion des aktuellen Fahrzeugzustandes festgestellt wird.

5. Verfahren nach mindestens einem der vorhergehenden Ansprüche, **dadurch gekennzeichnet, dass** die Notwendigkeit, für die aktivierten Funktionen einen Sicherheitspfad aufzubauen anhand des Fahrerzustandes festgestellt wird.

6. Verfahren nach mindestens einem der vorhergehenden Ansprüche, **dadurch gekennzeichnet, dass** der Sicherheitspfad verwendet wird, um die ausgegebene Trajektorie des Hauptpfades, auf der gefahren werden soll, gegen ein alternatives Straßenmodell des Sicherheitspfades zu plausibilisieren.

7. Verfahren nach mindestens einem der vorhergehenden Ansprüche, **dadurch gekennzeichnet, dass** der Sicherheitspfad verwendet wird, um bei unplausibler Trajektorie des Hauptpfades, die Fahrerübergabe und einen risikominimalen Zustand herbeizuführen.

8. Verfahren nach mindestens einem der vorhergehenden Ansprüche, **dadurch gekennzeichnet, dass** ein Straßenmodell des Sicherheitspfades anhand von detektierten Spurmarkierungen einer redundanten Kamera erstellt wird.

9. Assistenzsystem, das vorzugsweise durch ein Verfahren nach einem der vorhergehenden Ansprüche betrieben wird, umfassend
eine Steuereinrichtung (2) zur Steuerung des Assistenzsystems,
mehrere Sensoren zur Umfelderfassung, wobei
ein erstes Sensorset festgelegt wird, welches mindestens einen Sensor der Sensoren zur Umfelderfassung umfasst, und
ein zweites Sensorset festgelegt wird, welches mindestens einen Sensor der Sensoren zur Umfelderfassung umfasst, wobei
die Sensorsignale des ersten Sensorsets zur Erstellung eines Umfeldmodells herangezogen werden,
Trajektorienplanung und Fahrfunktionen des Assistenzsystems anhand des Umfeldmodells durchgeführt werden, und
ein Sensorsignalpfadschalter vorgesehen ist, der die Sensorsignale des zweiten Sensorsets entweder über einen Hauptpfad an die Signalverarbeitung des Umfeldmodells oder über einen Sicherheitspfad an die Signalverarbeitung einer Plausibilitätsüberprüfung der geplanten Trajektorie schaltet, und
ein Modus-Manager vorgesehen ist, der dazu hergerichtet ist, Assistenzfunktionen und automatisch zu aktivierende Assistenzfunktionen zu erkennen und anhand der erkannten Assistenzfunktionen die Notwendigkeit feststellen kann, ob ein Sicherheitspfad benötigt wird oder nicht.

10. Computerprogramm mit Programmcode zur Durchführung eines Verfahrens gemäß einem der Ansprüche 1-8, wenn das Computerprogramm in einem Computer oder einem programmierbaren Rechner ausgeführt wird.

11. Computerlesbares Speichermedium, das Anweisungen umfasst, welche den Computer, auf dem sie ausgeführt werden, veranlassen, ein Verfahren nach einem der Ansprüche 1-8 durchzuführen.

12. Fahrzeug, umfassend ein Assistenzsystem nach Anspruch 9, ein Computerprogramm nach Anspruch 10 oder ein computerlesbares Speichermedium nach Anspruch 11.

## Claims

1. A method for operating an assistance system for a vehicle (1), comprising a control device (2) for controlling the assistance system,
multiple sensors for capturing the environment, wherein
a first sensor set is specified, which comprises at least one sensor of the sensors for capturing the environment, and
a second sensor set is specified, which comprises at least one sensor of the sensors for capturing the environment, wherein
the sensor signals of the first sensor set are used to create an environmental model,
trajectory planning and driving functions of the assistance system are carried out based on the environmental model, and
a sensor signal path switch is provided that conducts the sensor signals from the second sensor set either via a main path to the signal processing of the environmental model or via a safety path to the signal processing of a plausibility check of the planned trajectory,
**characterized in that**
a mode manager is provided which is adapted to detect assistance functions and assistance functions to be automatically activated and which can determine the need whether a safety path is required or not based on the assistance functions detected.

2. The method of claim 1, **characterized in that** the sensor signal path switch switches the sensor signals based on the determination by the mode manager.

3. The method of any one of the preceding claims, comprising the following method steps:
- determining an assistance function to be performed,
- determining an assistance function to be automatically activated,
- determining the need to establish a safety path for the activated functions,
- if the safety path is necessary, disabling the signals from the sensors of the safety path for the main path of the system,
- if the safety path is necessary, activating the safety path to check the outputs of the system's main path, and
- deactivating the assistance functions that are not possible without the sensors of the safety path.

4. The method of at least one of the preceding claims, **characterized in that** the need to establish a safety path for the activated functions is determined based on the activated function of the current vehicle state.

5. The method of at least one of the preceding claims, **characterized in that** the need to establish a safety path for the activated functions is determined based on the driver state.

6. The method of at least one of the preceding claims, **characterized in that** the safety path is used to check the plausibility of the output trajectory of the main path on which driving is intended against an alternative road model of the safety path.

7. The method of at least one of the preceding claims, **characterized in that** the safety path is used to bring about the driver handover and a minimal risk state in the event of an implausible trajectory of the main path.

8. The method of at least one of the preceding claims, **characterized in that** a road model of the safety path is created based on lane markings detected by a redundant camera.

9. An assistance system which is preferably operated by a method of any one of the preceding claims, comprising
a control device (2) for controlling the assistance system, multiple sensors for capturing the environment, wherein
a first sensor set is specified which comprises at least one sensor of the sensors for capturing the environment, and
a second sensor set is specified which comprises at least one sensor of the sensors for capturing the environment, wherein
the sensor signals of the first sensor set are used to create an environmental model,
trajectory planning and driving functions of the assistance system are carried out based on the environmental model, and
a sensor signal path switch is provided that switches the sensor signals from the second sensor set either via a main path to the signal processing of the environmental model or via a safety path to the signal processing of a plausibility check of the planned trajectory, and
a mode manager is provided which is adapted to detect assistance functions and assistance functions to be automatically activated and which can determine the need whether a safety path is required or not based on the assistance functions detected.

10. A computer program having program code for carrying out a method of any one of claims 1-8 when the computer program is executed in a computer or a programmable computing device.

11. A computer-readable storage medium comprising instructions which cause the computer on which they are executed to carry out a method of any one of claims 1-8.

12. A vehicle comprising an assistance system of claim 9, a computer program of claim 10, or a computer-readable storage medium of claim 11.

## Revendications

1. Procédé de fonctionnement d'un système d'assistance pour un véhicule (1), comprenant un dispositif de commande (2) pour commander le système d'assistance,
plusieurs capteurs pour la détection d'environnement, dans lequel
un premier ensemble de capteurs, qui comprend au moins un capteur parmi les capteurs de détection d'environnement, est défini et un second ensemble de capteurs, qui comprend au moins un capteur parmi les capteurs de détection d'environnement, est défini, dans lequel
les signaux de capteur du premier ensemble de capteurs sont utilisés pour créer un modèle d'environnement,
la planification de trajectoire et les fonctions de conduite du système d'assistance sont effectuées à l'aide du modèle d'environnement, et
un commutateur de chemin de signal de capteur est prévu, lequel achemine les signaux de capteur du second ensemble de capteurs soit par un chemin principal vers le traitement de signal du modèle d'environnement, soit par un chemin de sécurité vers le traitement de signal d'une vérification de plausibilité de la trajectoire planifiée,
**caractérisé en ce que**
un gestionnaire de mode est prévu, lequel est conçu pour reconnaître les fonctions d'assistance et les fonctions d'assistance à activer automatiquement et, sur la base des fonctions d'assistance reconnues, peut déterminer si un chemin de sécurité est nécessaire ou non.

2. Procédé selon la revendication 1, **caractérisé en ce que** le commutateur de chemin de signal de capteur commute les signaux de capteur à l'aide de la détermination du gestionnaire de mode.

3. Procédé selon l'une des revendications précédentes, comprenant les étapes de procédé suivantes :
- la détermination d'une fonction d'assistance à effectuer,
- la détermination d'une fonction d'assistance à activer automatiquement,
- la détermination de la nécessité d'établir un chemin de sécurité pour les fonctions activées,
- la désactivation des signaux des capteurs de chemin de sécurité pour le chemin principal du système si le chemin de sécurité est nécessaire,
- l'activation du chemin de sécurité pour vérifier les sorties du chemin principal du système si le chemin de sécurité est nécessaire, et
- la désactivation des fonctions d'assistance à la conduite qui ne sont pas possibles sans les capteurs du chemin de sécurité.

4. Procédé selon au moins l'une des revendications précédentes, **caractérisé en ce que** la nécessité d'établir un chemin de sécurité pour les fonctions activées est déterminée à l'aide de la fonction activée de l'état actuel du véhicule.

5. Procédé selon au moins l'une des revendications précédentes, **caractérisé en ce que** la nécessité d'établir un chemin de sécurité pour les fonctions activées est déterminée en fonction de l'état du conducteur.

6. Procédé selon au moins l'une des revendications précédentes, **caractérisé en ce que** le chemin de sécurité est utilisé pour vérifier la plausibilité de la trajectoire de sortie du chemin principal sur lequel il faut rouler par rapport à un modèle de route alternatif du chemin de sécurité.

7. Procédé selon au moins l'une des revendications précédentes, **caractérisé en ce que** le chemin de sécurité est utilisé pour provoquer le transfert du conducteur et un état à risque minimal en cas de trajectoire non plausible du chemin principal.

8. Procédé selon au moins l'une des revendications précédentes, **caractérisé en ce qu'**un modèle de route du chemin de sécurité est établi à l'aide de marquages de voie détectés d'une caméra redondante.

9. Système d'assistance, de préférence exploité par un procédé selon l'une des revendications précédentes, comprenant
un dispositif de commande (2) pour commander le système d'assistance,
plusieurs capteurs pour la détection d'environnement, dans lequel
un premier ensemble de capteurs est défini, comprenant au moins un capteur parmi les capteurs de détection d'environnement, et un second ensemble de capteurs est défini, comprenant au moins un capteur parmi les capteurs de détection d'environnement, dans lequel
les signaux de capteur du premier ensemble de capteurs sont utilisés pour créer un modèle d'environnement,
la planification de trajectoire et les fonctions de conduite du système d'assistance sont effectuées à l'aide du modèle d'environnement, et
un commutateur de chemin de signal de capteur est prévu, lequel commute les signaux de capteur du second ensemble de capteurs soit par un chemin principal vers le traitement de signal du modèle d'environnement, soit par un chemin de sécurité vers le traitement de signal d'une vérification de plausibilité de la trajectoire planifiée, et
un gestionnaire de mode est prévu, lequel est conçu pour reconnaître les fonctions d'assistance et les fonctions d'assistance à activer automatiquement et, sur la base des fonctions d'assistance reconnues, peut déterminer si un chemin de sécurité est nécessaire ou non.

10. Programme informatique avec code de programme pour mettre en œuvre un procédé selon l'une des revendications 1 à 8, lorsque le programme informatique est exécuté dans un ordinateur ou un ordinateur programmable.

11. Support de stockage lisible par ordinateur comprenant des instructions qui amènent l'ordinateur sur lequel elles sont exécutées à exécuter un procédé selon l'une quelconque des revendications 1 à 8.

12. Véhicule comprenant un système d'assistance selon la revendication 9, un programme informatique selon la revendication 10 ou un support de stockage lisible par ordinateur selon la revendication 11.
